# EUROPÄISCHE PATENTSCHRIFT

(11) **EP 3 658 311 B1**
(45) Veröffentlichungstag und Bekanntmachung des Hinweises auf die Patenterteilung: **21.06.2023**
(21) Anmeldenummer: 18722011.6
(22) Anmeldetag: 27.04.2018
(51) Int. Cl.: B64F 5/10, B21J 13/08, B21J 15/14, B21J 15/42, B23Q 1/48, B23Q 1/52

(54) **BEARBEITUNGSANLAGE FÜR FLUGZEUGSTRUKTURBAUTEILE**
PROCESSING SYSTEM FOR AIRCRAFT STRUCTURAL COMPONENTS
INSTALLATION DE TRAITEMENT D'ÉLÉMENTS STRUCTURAUX D'AÉRONEF

(30) Priorität: 24.07.2017 DE 102017116716
(43) Veröffentlichungstag der Anmeldung: 03.06.2020
(73) Patentinhaber: Broetje-Automation GmbH, 26180 Rastede (DE)
(72) Erfinder: VARRELMANN, Nils, 26316 Varel (DE); NEEMANN, Volker, 26655 Westerstede (DE)
(74) Vertreter: Gottschald Patentanwälte Partnerschaft mbB
(86) Internationale Anmeldenummer: PCT/EP2018/060899
(87) Internationale Veröffentlichungsnummer: WO 2019/020227

(56) Entgegenhaltungen:
- EP-A1- 2 682 225
- EP-A2- 0 836 908
- US-A- 4 967 947
- US-A- 5 778 505
- US-A1- 2006 182 557

## Beschreibung

Die Erfindung betrifft eine Bearbeitungsanlage für Flugzeugstrukturbauteile nach dem Oberbegriff des Anspruchs 1 sowie ein Verfahren zur Bearbeitung eines Flugzeugstrukturbauteils mit einer vorschlagsgemäßen Bearbeitungsanlage gemäß dem Oberbegriff des Anspruchs 12.

Die Herstellung von Flugkörpern und insbesondere Flugzeugen umfasst die Bearbeitung großer Flugzeugstrukturbauteile wie etwa der Flügel und des Rumpfes oder Teilen davon in speziellen Bearbeitungsanlagen. Bearbeitungsanlagen für Flugzeugstrukturbauteile sind beispielsweise in der US 4,967,947 oder der US 2006/0182557 A1 beschrieben.

Die bekannte Bearbeitungsanlage (US 5,778,505), von der die Erfindung ausgeht, weist eine Bearbeitungsstation mit einem Aufspannrahmen zur Aufnahme des jeweils zu bearbeitenden Flugzeugstrukturbauteils auf. Die Bearbeitungsstation ist ferner mit einer Bearbeitungseinheit in Form einer Nieteinheit ausgestattet, die eine Oberwerkzeugeinheit mit einem Oberwerkzeug und eine zugeordnete Unterwerkzeugeinheit mit einem Unterwerkzeug aufweist, wobei bei einer koaxialen Ausrichtung der Werkzeugachse des Oberwerkzeugs zur Werkzeugachse des Unterwerkzeugs ein Nietvorgang am Flugzeugstrukturbauteil durchgeführt werden kann.

Bei der bekannten Bearbeitungsanlage ist ein C-förmiges Gestell vorgesehen, das ein oberes Gestellteil, ein unteres Gestellteil und ein die beiden Gestellteile miteinander verbindendes seitliches Gestellteil aufweist, wobei das Oberwerkzeug über einen Oberwerkzeugträger am oberen Gestellteil und das Unterwerkzeug über einen Unterwerkzeugträger am unteren Gestellteil angeordnet ist. Der Unterwerkzeugträger ist dabei ebenfalls C-förmig ausgebildet und am unteren Gestellteil drehbar gelagert. Der Unterwerkzeugträger weist ebenfalls ein unteres Trägerteil, ein oberes Trägerteil und ein das obere mit dem unteren Trägerteil verbindendes seitliches Trägerteil auf, wobei das Unterwerkzeug am äußeren Ende des oberen Trägerteils angeordnet ist. In der Höhenrichtung gegenüberliegend am äußeren Ende des unteren Trägerteils befindet sich die Drehmechanik, über die der Unterwerkzeugträger mit dem unteren Gestellteil des C-förmigen Gestells verbunden ist. Die Bearbeitungsstation ist dann so ausgestaltet, dass die beiden Werkzeugachsen, das heißt die Werkzeugachse des Oberwerkzeugs und die Werkzeugachse des Unterwerkzeugs, immer koaaxial zur Unterwerkzeugträgerachse (Drehachse des Unterwerkzeugträgers) verlaufen.

Bei der Bearbeitung des Flugzeugstrukturbauteils wird der Aufspannrahmen zwischen den einzelnen Nietvorgängen um eine Rahmenlängsachse gedreht, wobei der Aufspannrahmen insgesamt um im Wesentlichen 180° gedreht werden kann. Bei einer vertikalen Ausrichtung des Aufspannrahmens, wenn also die beiden zur Rahmenlängsachse parallelen Rahmenteile in Höhenrichtung übereinander angeordnet sind, ist einer der Rahmenteile innerhalb des C-förmigen Unterwerkzeugträgers, also zwischen dem unteren Trägerteil und dem oberen Trägerteil des Unterwerkzeugträgers, angeordnet, wohingegen der andere Rahmenteil zwischen Unterwerkzeugträger und oberem Gestellteil des C-förmigen Gestells angeordnet ist. Aus dieser Position heraus wird der Aufspannrahmen dann zwischen den einzelnen Nietvorgängen sukzessive um 180° gedreht, bis der andere Rahmenteil innerhalb des C-förmigen Unterwerkzeugträgers angeordnet ist und der Aufspannrahmen wieder eine vertikale Ausrichtung hat. Um solche vertikalen Ausrichtungen des Aufspannrahmens zu ermöglichen, muss die Bearbeitungsanlage entsprechend groß ausgelegt sein. Insbesondere die Arbeitshöhe ist relativ groß, was wiederum zu entsprechend großen Abmessungen der Bearbeitungsanlage in der Höhenrichtung führt.

Der Erfindung liegt das Problem zugrunde, die bekannte Bearbeitungsanlage derart auszugestalten und weiterzubilden, dass die Arbeitshöhe und entsprechend die Dimension der Anlage in Höhenrichtung verringert werden kann.

Das obige Problem wird bei einer Bearbeitungsanlage gemäß dem Oberbegriff von Anspruch 1 durch die Merkmale des kennzeichnenden Teils von Anspruch 1 gelöst.

Wesentlich ist die grundsätzliche Überlegung, die Unterwerkzeugträgerachse, das heißt die Drehachse des Unterwerkzeugträgers, so zu verlagern, dass sie nicht mehr bei jedem Bearbeitungsschritt, beispielsweise Nietvorgang oder Bohrvorgang, in Höhenrichtung unterhalb des Unterwerkzeugs angeordnet ist, sondern dazu versetzt ist. Mit anderen Worten ist die Werkzeugachse des Unterwerkzeugs (zweite Werkzeugsachse) nicht zwangsläufig immer koaxial zur Unterwerkzeugträgerachse ausgerichtet, wodurch, zumindest in einigen Bearbeitungspositionen des Unterwerkzeugs, unterhalb des Unterwerkzeugs ein Freiraum zur Anordnung eines Abschnitts des Aufspannrahmens und Flugzeugstrukturbauteils während der Bearbeitung geschaffen werden kann. Dieser Freiraum erstreckt sich dabei zwischen dem oberen Trägerteil des Unterwerkzeugträgers, an dem das Unterwerkzeug gelagert ist, und der Oberfläche, auf der der Unterwerkzeugträger drehbar gelagert ist. Im Unterschied zum Stand der Technik wird also ein Raum oberhalb der besagten Oberfläche, auf der der Unterwerkzeugträger gelagert ist, geschaffen, der über seine gesamte Höhe zur Aufnahme eines Abschnitts des Aufspannrahmens und Flugzeugstrukturbauteils zur Verfügung steht. Dagegen wird beim Stand der Technik dieser Raum teilweise von einem unteren Teil des Unterwerkzeugträgers eingenommen, über den der Unterwerkzeugträger mit der darunterliegenden Oberfläche drehbar verbunden ist. Gegenüber dem Stand der Technik kann damit die Arbeitshöhe verringert werden, insbesondere um mindestens 0,3 m, bevorzugt mindestens 0,4 m, besonders bevorzugt mindestens 0,5 m. Entsprechend kann auch die Gesamthöhe der Bearbeitungsanlage verringert werden.

Im Einzelnen wird die Verringerung der Arbeitshöhe und gegebenenfalls Verringerung der Höhe der Bearbeitungsanlage dadurch erreicht, dass in mindestens einer Bearbeitungsposition des Oberwerkzeugs und/oder Unterwerkzeugs die jeweilige Werkzeugachse nicht-koaxial zur Unterwerkzeugträgerachse verläuft. Insbesondere ist die jeweilige Werkzeugachse parallelverschoben zur Unterwerkzeugträgerachse, das heißt, die Achsen sind voneinander beabstandet und parallel zueinander angeordnet (Anspruch 2). Mit einer Bearbeitungsposition des Oberwerkzeugs bzw. Unterwerkzeugs ist eine Position des jeweiligen Werkzeugs gemeint, in der die Bearbeitung des Flugzeugstrukturbauteils möglich ist. Insbesondere handelt es sich bei der Bearbeitung um einen Nietvorgang oder Bohrvorgang. Es sei darauf hingewiesen, dass neben der oder den Bearbeitungspositionen, in der die jeweilige Werkzeugachse nicht-koaxial bzw. parallelverschoben zur Unterwerkzeugträgerachse ist, auch eine oder mehrere Bearbeitungspositionen des jeweiligen Werkzeugs vorgesehen sein können, in denen die jeweilige Werkzeugachse koaxial zur Unterwerkzeugträgerachse verläuft.

Nach der Ausgestaltung gemäß Anspruch 3 ist der Unterwerkzeugträger an und insbesondere auf einem unteren Gestellteil drehbar gelagert, das sich entlang einer zur Längsrichtung und Hochrichtung orthogonalen Querrichtung erstreckt. Das Gestellteil ist insbesondere Teil eines Gestells, das sowohl die Oberwerkzeugeinheit als auch Unterwerkzeugeinheit trägt. In der mindestens einen Bearbeitungsposition, in der die jeweilige Werkzeugachse nicht-koaxial bzw. parallelverschoben zur Unterwerkzeugträgerachse ist, ist dann der bereits erwähnte Freiraum zwischen dem Unterwerkzeug und dem unteren Gestellteil ausgebildet.

Ein solches Gestell ermöglicht eine geeignete Arbeitshöhe zur Bearbeitung von diversen Flugzeugstrukturbauteilen, beispielsweise Rümpfen oder Flügeln. Die Arbeitshöhe, also die Stelle, an der das Oberwerkzeug mit dem Unterwerkzeug bestimmungsgemäß zusammenwirkt, liegt dabei insbesondere in einem Bereich von 5 m bis 7 m, bevorzugt in einem Bereich von 5,5 m bis 6,5 m, besonders bevorzugt in einem Bereich von 5,5 m bis 6 m.

Der Unterwerkzeugträger kann auf ganz unterschiedliche Weise ausgestaltet sein. Insbesondere kann dieser einen Tragbalken und eine Tragsäule aufweisen, wobei der Tragbalken dazu dient, das Unterwerkzeug zu lagern, und die Tragsäule den Tragbalken trägt (Anspruch 4). Die Tragsäule ist derjenige Teil des Unterwerkzeugträgers, der drehbar gelagert ist. Insbesondere ist die Tragsäule am unteren Gestellteil drehbar gelagert. Tragsäule und Tragbalken verlaufen insbesondere orthogonal zueinander und bilden entsprechend eine L-Form. Grundsätzlich ist es aber auch denkbar, einen Unterwerkzeugträger in einer C-Form vorzusehen, bei der sich also von der Tragsäule in Höhenrichtung voneinander beabstandet zwei Balken erstrecken, wobei in diesem Fall der untere der Balken eine geringere Länge als der obere der Balken (Tragbalken) aufweisen muss. Denn nur wenn der obere Tragbalken den unteren Balken überragt, kann auch bei einer C-Form des Unterwerkzeugträgers besagter Freiraum erzeugt werden, der sich von dem unteren Gestellteil bis zum oberen Tragbalken bzw. Unterwerkzeug erstreckt.

Anspruch 5 definiert bevorzugte Dimensionen des Unterwerkzeugträgers.

In den Ansprüchen 6 bis 10 sind verschiedene Möglichkeiten definiert, wie sich einzelne Komponenten der Bearbeitungsanlage, insbesondere relativ zueinander, bewegen können, damit das zu bearbeitende Flugzeugstrukturbauteil optimal zwischen Oberwerkzeug und Unterwerkzeug angeordnet werden kann. Für die unterschiedlichen Bewegungen, insbesondere Drehbewegungen und Linearbewegungen, können entsprechende Antriebsmotoren vorgesehen sein, die vorzugsweise unabhängig voneinander betätigbar sind (Anspruch 11).

Nach einer weiteren Lehre gemäß Anspruch 12, der eigenständige Bedeutung zukommt, wird ein Verfahren zur Bearbeitung eines Flugzeugstrukturbauteils mit einer vorschlagsgemäßen Bearbeitungsanlage beansprucht.

Wesentlich nach der weiteren Lehre ist, dass während der Bearbeitung des Flugzeugstrukturbauteils, insbesondere bei einem Nietvorgang oder Bohrvorgang, die erste Werkzeugachse und/oder zweite Werkzeugachse zumindest temporär nicht-koaxial zur Unterwerkzeugträgerachse, vorzugsweise parallelverschoben dazu (Anspruch 13), verläuft. Auf diese Weise kann die Arbeitshöhe verringert und entsprechend auch die Gesamthöhe der Bearbeitungsanlage minimiert werden. Im Übrigen sei hinsichtlich des Verfahrens auf die vorangehenden Ausführungen zur Bearbeitungsanlage verwiesen.

Nach der Ausgestaltung gemäß Anspruch 14 kann der Aufspannrahmen mit dem daran angeordneten zu bearbeitenden Flugzeugstrukturbauteil über einen Winkelbereich von mindestens 180° oder mehr um eine Rahmenlängsachse gedreht werden. Die Rahmenlängsachse verläuft dabei entlang der Stationslängsachse.

Im Folgenden wird die Erfindung anhand einer lediglich Ausführungsbeispiele darstellenden Zeichnung näher erläutert. In der Zeichnung zeigt
- Fig. 1: eine vorschlagsgemäße Bearbeitungsanlage in einer ersten Bearbeitungsstellung a) in einer perspektivischen Ansicht und b) in einer geschnittenen Ansicht,
- Fig. 2: die Bearbeitungsanlage gemäß Fig. 1 in einer zweiten Bearbeitungsstellung a) in einer perspektivischen Ansicht und b) in einer geschnittenen Ansicht und
- Fig. 3: eine schematische Ansicht der Bearbeitungsanlage gemäß Fig. 1 in verschiedenen Bearbeitungsstellungen.

Die dargestellte Bearbeitungsanlage 1 dient der Bearbeitung von Flugzeugstrukturbauteilen 2, bei denen es sich, wie weiter oben angesprochen, um Rümpfe, Flügel oder andere große Flugzeugstrukturbauteile handeln kann. Die Bearbeitungsanlage 1 weist eine Bearbeitungsstation 3 auf. Die Bearbeitungsstation 3 weist zum Einen einen Aufspannrahmen 4 zur Aufnahme des jeweils zu bearbeitenden Flugzeugstrukturbauteils 2 und zum Anderen eine Bearbeitungseinheit 5 für die Bearbeitung des Flugzeugstrukturbauteils 2 auf.

Der Aufspannrahmen 4 erstreckt sich entlang einer Stationslängsachse 6, die in eine Längsrichtung X der Bearbeitungsanlage 1 verläuft. Die Erstreckung des Aufspannrahmens 4 entlang der Stationslängsachse 6 ist weit zu verstehen. Sie bedeutet, dass der Aufspannrahmen 4 zumindest in einer Grundstellung parallel zu der Stationslängsachse 6 verläuft, beispielsweise wenn der Aufspannrahmen 4 vertikal ausgerichtet ist und/oder horizontal ausgerichtet ist.

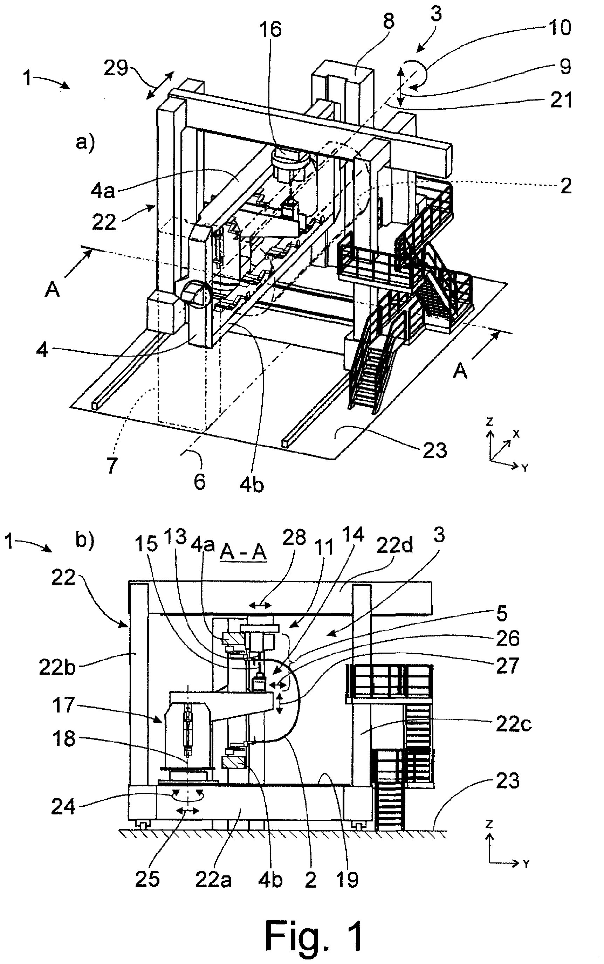

Der Aufspannrahmen 4 ist hier und vorzugsweise an zwei Positioniertürmen 7, 8, die sich parallel zur Höhenrichtung Z erstrecken, höhenverstellbar und schwenkbar angelenkt. Die Höhenverstellbarkeit ist in Fig. 1a mit dem Bezugszeichen 9 und die Schwenkbarkeit mit dem Bezugszeichen 10 angedeutet. Dabei kann die Höhenverstellbarkeit 9 für die beiden Positioniertürme 7, 8 getrennt möglich sein, so dass ein Kippen des Aufspannrahmens 4 um eine quer zur Stationslängsachse 6 verlaufende Kippachse (hier nicht dargestellt) realisierbar ist.

Die Bearbeitungseinheit 5, bei der es sich hier und vorzugsweise um eine Nieteinheit, eine Bohreinheit oder eine kombinierte Niet-/Bohreinheit handelt, umfasst eine Oberwerkzeugeinheit 11 mit einem entlang einer ersten Werkzeugachse 12a ausgerichteten Oberwerkzeug 13 und eine zugeordnete Unterwerkzeugeinheit 14 mit einem entlang einer zweiten Werkzeugachse 12b ausgerichteten Unterwerkzeug 15. Die Oberwerkzeugeinheit 11 und die Unterwerkzeugeinheit 14 bilden jeweils einen Endeffektor, wobei das Oberwerkzeug 13 insbesondere ein Nietkopf oder Bohrkopf ist und das Unterwerkzeug 15 das korrespondierende Gegenstück dazu bildet.

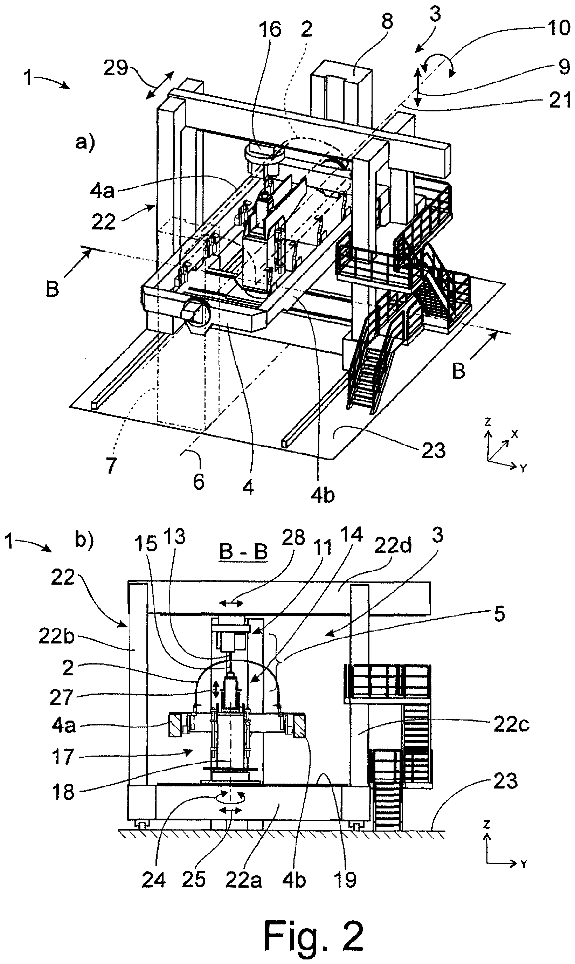

Die erste Werkzeugachse 12a und die zweite Werkzeugachse 12b verlaufen winkelig und hier insbesondere in eine Richtung orthogonal zur Längsrichtung X. Diese Richtung wird hier auch als Höhenrichtung Z bezeichnet. Die erste Werkzeugachse 12a und die zweite Werkzeugachse 12b sind bei dem Ausführungsbeispiel in den Fig. 1 bis 3 in jeder Bearbeitungsposition des Oberwerkzeugs 13 und des Unterwerkzeugs 15 koaxial zueinander ausgerichtet, verlaufen also beide fluchtend in der Höhenrichtung Z. Beide Werkzeugachsen 12a, 12b sind im vorliegenden Fall individuell einstellbar, können also unabhängig voneinander in einer zur Höhenrichtung Z orthogonalen Ebene parallelverschoben werden. Die Einstellbarkeit des Unterwerkzeugs 15 bzw. der Unterwerkzeugeinheit 14 ist in Fig. 1b mit dem Bezugszeichen 26 und die Einstellbarkeit des Oberwerkzeugs 13 bzw. der Oberwerkzeugeinheit 11 mit dem Bezugszeichen 28 angedeutet. Grundsätzlich wäre es aber auch denkbar, zumindest eine der Werkzeugachsen 12a, 12b, insbesondere die erste Werkzeugachse 12a, relativ zur Stationslängsachse 6 unbeweglich anzuordnen.

Das Oberwerkzeug 13 und das Unterwerkzeug 15 sind bei dem hier beschriebenen Ausführungsbeispiel jeweils an einem zugeordneten Werkzeugträger 16, 17 gelagert, das Oberwerkzeug 13 an einem Oberwerkzeugträger 16 und das Unterwerkzeug 15 an einem Unterwerkzeugträger 17, wobei der Werkzeugträger 16, 17 jeweils Bestandteil der Oberwerkzeugeinheit 11 bzw. Unterwerkzeugeinheit 14 ist. Der Unterwerkzeugträger 17 ist hier um eine zur Höhenrichtung Z parallele Unterwerkzeugträgerachse 18, die eine Drehachse bildet, drehbar, und zwar insbesondere um mindestens 180°, bevorzugt um mindestens 360°, was hier durch das Bezugszeichen 24 angedeutet ist.

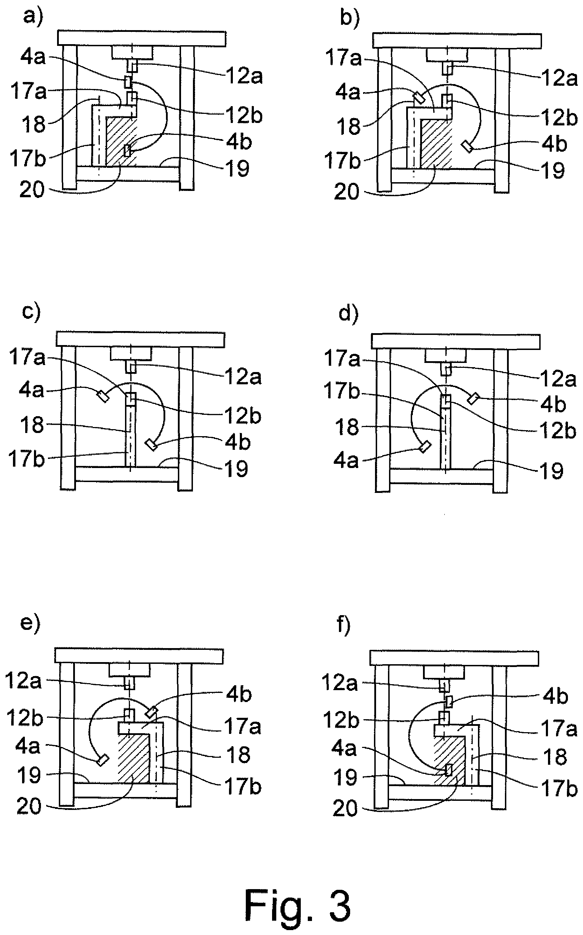

Interessant ist nun, dass, wie Fig. 3 anschaulich zeigt, in mindestens einer Bearbeitungsposition, hier in mehreren Bearbeitungspositionen, des Oberwerkzeugs 13 und/oder des Unterwerkzeugs 15 die jeweilige Werkzeugachse 12a, 12b nicht-koaxial und insbesondere parallelverschoben zur Unterwerkzeugträgerachse 18 verläuft. Mit anderen Worten ist das Oberwerkzeug 13 und das Unterwerkzeug 15, wie die Fig. 3a, 3b, 3e und 3f zeigen, so positioniert, dass dessen Werkzeugachse 12a, 12b zur Unterwerkzeugträgerachse 18 versetzt ist. Das Oberwerkzeug 13 und das Unterwerkzeug 15 können aber, wie die Fig. 3c und 3d zeigen, jeweils auch in einer Bearbeitungsposition positioniert werden, in der die zugehörige Werkzeugachse 12a, 12b jeweils zur Unterwerkzeugträgerachse 18 koaxial verläuft. Hier und vorzugsweise werden während der Bearbeitung ein und desselben Flugzeugstrukturbauteils 2 nacheinander sowohl Bearbeitungspositionen, bei denen sich die jeweilige Werkzeugachse 12a, 12b nicht-koaxial zur Unterwerkzeugträgerachse 18 erstreckt, als auch Bearbeitungspositionen, bei denen sich die jeweilige Werkzeugachse 12a, 12b koaxial zur Unterwerkzeugträgerachse 18 erstreckt, durchlaufen.

Der horizontale Versatz zwischen den Werkzeugachsen 12a, 12b und der Unterwerkzeugträgerachse 18 hat den Vorteil, dass in der Höhenrichtung Z oberhalb der Befestigungsebene 19, in der der Unterwerkzeugträger 17 drehbar gelagert ist, ein Freiraum 20 gebildet wird, der sich bis zu einem oberen Teil 17a des Unterwerkzeugträgers 17 erstreckt. Dieser Freiraum 20 dient zur abschnittsweisen Aufnahme des Aufspannrahmens 4 und darauf befestigten Flugzeugstrukturbauteils 2 während verschiedener Bearbeitungsstellungen des Aufspannrahmens 4. In diesen Bearbeitungsstellungen, die in den Fig. 3a und 3f gezeigt sind, ist der Aufspannrahmen 4 vertikal ausgerichtet, d. h. die parallel zur Rahmenlängsachse 21 verlaufenden Rahmenteile 4a, 4b sind in der Höhenrichtung Z übereinander angeordnet, wobei abhängig von der jeweiligen Bearbeitungsstellung entweder der Rahmenteil 4a mit einem daran angeordneten Abschnitt des Flugzeugstrukturbauteils 2 oder der Rahmenteil 4b mit einem daran angeordneten Abschnitt des Flugzeugstrukturbauteils 2 in den Freiraum 20 ragt. Da beim Stand der Technik der Freiraum 20 zumindest im Wesentlichen dieselbe Größe haben muss, um denselben Zweck zu erfüllen, allerdings der Unterwerkzeugträger 17 C-förmig ausgestaltet ist und ein unterer Trägerteil des Unterwerkzeugträgers 17 in den Raum zwischen Befestigungsebene 19 des Unterwerkzeugträgers 17 und Unterwerkzeug 15 ragt, muss beim Stand der Technik der notwendige Freiraum 20 oberhalb des unteren Trägerteils des Unterwerkzeugträgers 17 zur Verfügung gestellt werden. Da aber bei der vorschlagsgemäßen Bearbeitungsanlage 1 der Unterwerkzeugträger 17 keinen solchen unteren Trägerteil aufweist, der in den Raum zwischen der Befestigungsebene 19 und dem Unterwerkzeug 15 ragt, ist hier der Freiraum 20 bezogen auf die Höhenrichtung Z weiter unten angeordnet. Entsprechend ist auch das Unterwerkzeug 15 weiter unten angeordnet, wodurch auch die Arbeitshöhe entsprechend verringert wird. Insgesamt kann dadurch die Bearbeitungsanlage 1 zumindest in der Höhenrichtung Z kleiner dimensioniert werden als im Stand der Technik. Neben den dadurch ermöglichten kleineren Dimensionen der Bearbeitungsanlage 1 ist ein weiterer Vorteil der vorschlagsgemäßen Lösung, dass die Werkzeuge 13, 15, aber auch weitere Komponenten der Bearbeitungsanlage 1, besser zugänglich sind. Auch die Bearbeitung von 180°-Schalen als Flugzeugstrukturbauteil 2, wie im vorliegenden Ausführungsbeispiel in den Fig. 1 bis 3 dargestellt, wird dadurch erleichtert. Hier und vorzugsweise wird die Befestigungsebene 19, an der der Unterwerkzeugträger 17 drehbar gelagert ist, von einem unteren Gestellteil 22a eines Gestells 22 gebildet, welches hier portalförmig ausgebildet ist. Portalförmig heißt, dass der untere Gestellteil 22a, der in eine zur Längsrichtung X und Höhenrichtung Z orthogonale Querrichtung Y verläuft, beidseitig mit zwei sich in der Höhenrichtung Z erstreckenden Gestellteilen 22b, 22c verbunden ist, die in der Querrichtung Y voneinander beabstandet sind und einen oberen Gestellteil 22d tragen, der sich ebenfalls in der Querrichtung Y erstreckt. Der obere Gestellteil 22d wiederum trägt die Oberwerkzeugeinheit 11. In dem Bereich innerhalb des Gestells 22 verläuft der Aufspannrahmen 4, an dem das zu bearbeitende Flugzeugstrukturbauteil 2 befestigt ist, insbesondere in der Längsrichtung X. Der Aufspannrahmen 4 ist wie zuvor erläutert innerhalb des Gestells 22 um die Rahmenlängsachse 21, die hier zur Stationslängsachse 6 parallel ausgerichtet ist, aber auch zu dieser gekippt werden kann, schwenkbar. Es sei darauf hingewiesen, dass das Gestell 22 der Bearbeitungsanlage 1 grundsätzlich auch anders ausgebildet sein kann, um die Oberwerkzeugeinheit 11 zu tragen. Beispielsweise ist es auch denkbar, wie in die alternative Ausführung des Anspruchs 1, dass das Gestell 22 C-förmig ausgebildet ist, also nur einen einzigen seitlichen Gestellteil 22b aufweist, der den unteren Gestellteil 22a mit dem oberen Gestellteil 22d verbindet. Es ist von Vorteil, den Unterwerkzeugträger 17 fest mit dem Gestell 22 bzw. auf dem unteren Gestellteil 22a anzuordnen, da auf diese Weise die Gesamtheit aus Gestell 22, Oberwerkzeugeinheit 11 und Unterwerkzeugeinheit 14 relativ zum Aufspannrahmen 4 und dem Flugzeugstrukturbauteil 2 in Längsrichtung X bzw. entlang der Stationslängsachse 6 verfahren werden kann, wobei die Oberwerkzeugeinheit 11 zur Unterwerkzeugeinheit 14 immer optimal ausgerichtet bleibt. Die Verfahrbarkeit des Gestells 22 ist in Fig. 1a) mit dem Bezugszeichen 29 angedeutet.

Der Unterwerkzeugträger 17 weist hier einen Tragbalken 17a als oberen Trägerteil und eine Tragsäule 17b als seitlichen Trägerteil auf. Die Tragsäule 17b ist hier und vorzugsweise am unteren Gestellteil 22a drehbar gelagert und erstreckt sich im Wesentlichen in der Höhenrichtung Z. Der Tragbalken 17a ist hier und vorzugsweise beweglich mit der Tragsäule 17b verbunden und erstreckt sich von der Tragsäule 17b ausgehend im Wesentlichen in einer zur Höhenrichtung Z orthogonalen Ebene. Der Tragbalken 17a, der hier in der Höhenrichtung Z linear verfahrbar ist, was mit dem Bezugszeichen 27 angedeutet ist, dient hier zur Lagerung des Unterwerkzeugs 15. Die Einheit aus Tragbalken 17a und Tragsäule 17b bildet hier eine L-Form.

Der Unterwerkzeugträger 17 ist bei dem hier beschriebenen Ausführungsbeispiel am unteren Gestellteil 22a nicht nur drehbar gelagert, sondern auch in der Querrichtung Y linear verfahrbar. Außerdem ist hier und vorzugsweise das Unterwerkzeug 15 am Unterwerkzeugträger 17, insbesondere am oder auf dem Tragbalken 17a, in einer zur Höhenrichtung Z orthogonalen Ebene linear verfahrbar. Die Verfahrbarkeit des Unterwerkzeugträgers 17 bzw. der Tragsäule 17b ist in Fig. 1b mit dem Bezugszeichen 25 angedeutet. Auch der bereits erwähnte Oberwerkzeugträger 16 ist an dem oberen Gestellteil 22d in der Querrichtung Y linear verfahrbar, was mit dem Bezugszeichen 28 angedeutet ist.

Die einzelnen Drehbewegungen und Linearbewegungen der oben genannten Komponenten der Bearbeitungsanlage 1 können über Antriebsmotoren, insbesondere über voneinander unabhängige Antriebsmotoren, bewirkt werden (nicht dargestellt). So kann die vorschlagsgemäße Bearbeitungsanlage 1 einen oder mehrere der folgenden Antriebsmotoren aufweisen:
- einen Antriebsmotor für die Drehbewegung des Unterwerkzeugträgers 17, insbesondere relativ zum unteren Gestellteil 22a,
- einen Antriebsmotor für die Linearbewegung des Unterwerkzeugträgers 17, insbesondere relativ zum unteren Gestellteil 22a,
- einen Antriebsmotor für die Linearbewegung des Unterwerkzeugs 15, insbesondere relativ zum Unterwerkzeugträger 17,
- einen Antriebsmotor für eine Linearbewegung des Tragbalkens 17a des Unterwerkzeugträgers 17, insbesondere relativ zur Tragsäule 17b des Unterwerkzeugträgers 17,
- einen Antriebsmotor für die Linearbewegung des Oberwerkzeugträgers 16, insbesondere relativ zum oberen Gestellteil 22d,
- einen Antriebsmotor für die Linearbewegung des unteren Gestellteils 22a bzw. des Gestells 22, insbesondere relativ zum Untergrund 23.

Durch den vorangehend beschriebenen Aufbau der vorschlagsgemäßen Bearbeitungsanlage 1 lassen sich die einzelnen Komponenten der Bearbeitungsanlage 1 insbesondere derart zueinander ausrichten bzw. anordnen, dass beispielsweise der maximal einstellbare Abstand zwischen der jeweiligen Werkzeugachse 12a, 12b und der Unterwerkzeugträgerachse 18 mindestens 1,0 m, bevorzugt mindestens 2,0 m, besonders bevorzugt mindestens 3,0 m, beträgt (Fig. 3a, 3b, 3e, 3f). Der Freiraum 20 kann dabei in der Höhenrichtung Z eine Höhe von mindestens 2,0 m, bevorzugt mindestens 2,5 m, besonders bevorzugt mindestens 3,0 m, haben. Insbesondere ist dazu der Tragbalken 17a des Unterwerkzeugträgers 17 mindestens 2,0 m, bevorzugt mindestens 2,5 m, besonders bevorzugt mindestens 3,0 m, von der Befestigungsebene 19 bzw. von dem unterem Gestellteil 22a beabstandet. Die Breite des Freiraums 20 in einer zur Höhenrichtung Z orthogonalen Ebene, insbesondere die maximal einstellbare Breite des Freiraums 20 in der Querrichtung Y, die sich durch die Länge des Tragbalkens 17a ergibt, kann ebenfalls mindestens 2,0 m, bevorzugt mindestens 2,5 m, besonders bevorzugt mindestens 3,0 m, betragen.

Nach einer weiteren Lehre, der ebenfalls eigenständige Bedeutung zukommt, wird ein Verfahren zur Bearbeitung eines Flugzeugstrukturbauteils 2 mit einer vorschlagsgemäßen Bearbeitungsanlage 1 beansprucht.

Wesentlich bei dem vorschlagsgemäßen Verfahren ist, dass durch die Ausbildung der vorschlagsgemäßen Bearbeitungsanlage 1 während der Bearbeitung des Flugzeugstrukturbauteils 2, insbesondere während eines Niet- oder Bohrvorgangs, die erste Werkzeugachse 12a und/oder zweite Werkzeugachse 12b zumindest temporär (Fig. 3a, 3b, 3e, 3f) nicht-koaxial bzw. parallelverschoben zur Unterwerkzeugträgerachse 18 positioniert werden kann bzw. können. Auf diese Weise wird wie zuvor erläutert ein Freiraum 20 geschaffen, der sich in einem Bereich unterhalb des Unterwerkzeugs 15 bis zum unteren Ende des Unterwerkzeugträgers 17 bzw. bis zur Befestigungsebene 19 des Unterwerkzeugträgers 17 erstreckt, in den während der Bearbeitung der Aufspannrahmen 4 zusammen mit dem daran befestigten Flugzeugstrukturbauteil 2 abschnittweise eintauchen kann. Auf diese Weise wird erreicht, dass bei einer vergleichsweise geringen Arbeitshöhe ein Flugzeugstrukturbauteil 2, beispielsweise ein halbschalenförmiger Abschnitt eines Rumpfes, auf einfache Weise bearbeitet werden kann, wobei der Aufspannrahmen 4 mit dem darauf angeordneten Flugzeugstrukturbauteil 2 insbesondere über einen Winkelbereich von 180° oder mehr um eine zur Stationslängsachse 6 insbesondere parallele Rahmenlängsachse 21 geschwenkt werden kann.

## Patentansprüche

1. Bearbeitungsanlage für Flugzeugstrukturbauteile (2) mit einer Bearbeitungsstation (3) umfassend einen Aufspannrahmen (4) zur Aufnahme des jeweils zu bearbeitenden Flugzeugstrukturbauteils (2), wobei sich der Aufspannrahmen (4) entlang einer in eine Längsrichtung (X) verlaufenden Stationslängsachse (6) erstreckt, und eine Bearbeitungseinheit (5) für die Bearbeitung des Flugzeugstrukturbauteils (2), die eine Oberwerkzeugeinheit (11) mit einem entlang einer ersten Werkzeugachse (12a) ausgerichteten Oberwerkzeug (13) und eine Unterwerkzeugeinheit (14) mit einem entlang einer zweiten Werkzeugachse (12b) ausgerichteten Unterwerkzeug (15) aufweist, wobei die erste Werkzeugachse (12a) und die zweite Werkzeugachse (12b) parallel zu einer zur Längsrichtung (X) winkeligen, insbesondere orthogonalen, Höhenrichtung (Z) ausgerichtet oder ausrichtbar sind, wobei in mindestens einer Bearbeitungsposition des Oberwerkzeugs (13) und in mindestens einer Bearbeitungsposition des Unterwerkzeugs (15) die erste Werkzeugachse (12a) und die zweite Werkzeugachse (12b) koaxial zueinander ausgerichtet sind und wobei das Unterwerkzeug (15) an einem Unterwerkzeugträger (17) gelagert ist, wobei der untere Gestellteil (22a) und obere Gestellteil (22d) über mindestens einen seitlichen Gestellteil (22b, 22c) miteinander verbunden sind, wobei der untere Gestellteil (22d), der mindestens eine seitliche Gestellteil (22b, 22c) und der obere Gestellteil (22d) zusammen eine C-Form oder Portalform bilden,
wobei der Unterwerkzeugträger (17) am unteren Gestellteil (22a) in der Querrichtung (Y) linear verfahrbar ist,
wobei in mindestens einer Bearbeitungsposition des Oberwerkzeugs (13) und/oder in mindestens einer Bearbeitungsposition des Unterwerkzeugs (15) die jeweilige Werkzeugachse (12a, 12b) nicht-koaxial zur Unterwerkzeugträgerachse (18) verläuft.

2. Bearbeitungsanlage nach Anspruch 1, wobei in der mindestens einen Bearbeitungsposition die jeweilige Werkzeugachse (12a, 12b) parallelverschoben zur Unterwerkzeugträgerachse (18) ist, vorzugsweise, dass in der mindestens einen Bearbeitungsposition der maximal einstellbare Abstand zwischen der jeweiligen Werkzeugachse (12a, 12b) und der Unterwerkzeugträgerachse (18) mindestens 1,0 m, bevorzugt mindestens 2,0 m, besonders bevorzugt mindestens 3,0 m, beträgt.

3. Bearbeitungsanlage nach Anspruch 1 oder 2, wobei der Unterwerkzeugträger (17) an einem unteren Gestellteil (22a) drehbar gelagert ist, das sich in einer zur Längsrichtung (X) und Höhenrichtung (Z) orthogonalen Querrichtung (Y) erstreckt, wobei in der mindestens einen Bearbeitungsposition, in der die jeweilige Werkzeugachse (12a, 12b) nicht-koaxial bzw. parallelverschoben zur Unterwerkzeugträgerachse (18) ist, ein Freiraum (20) zwischen Unterwerkzeug (18) und unterem Gestellteil (22a) ausgebildet ist, der sich in der Höhenrichtung (Z) vom unteren Gestellteil (22a) bis zum Unterwerkzeug (15) oder bis zu einem Abschnitt des Unterwerkzeugträgers (17), an dem das Unterwerkzeug (15) gelagert ist, erstreckt, vorzugsweise, dass der Freiraum (20) in der Höhenrichtung (Z) eine Höhe von mindestens 2,0 m, bevorzugt mindestens 2,5 m, besonders bevorzugt mindestens 3,0 m, hat.

4. Bearbeitungsanlage nach einem der vorhergehenden Ansprüche, wobei der Unterwerkzeugträger (17) einen Tragbalken (17a) an dem das Unterwerkzeug (15) gelagert ist, und eine Tragsäule (17b), die drehbar gelagert ist und an der der Tragbalken (17a) befestigt ist, aufweist, vorzugsweise, dass sich der Tragbalken (17a) im Wesentlichen in einer in der Längsrichtung (X) und Querrichtung (Y) verlaufenden Ebene und die Tragsäule (17b) im Wesentlichen in der Höhenrichtung (Z) erstreckt und/oder Tragbalken (17a) und Tragsäule (17b) zusammen eine L-Form bilden.

5. Bearbeitungsanlage nach Anspruch 4, wobei der Tragbalken (17a) mindestens 2,0 m, bevorzugt mindestens 2,5 m, besonders bevorzugt mindestens 3,0 m, vom unteren Gestellteil (22a) beabstandet ist und/oder sich in der in der Längsrichtung (X) und Querrichtung (Y) verlaufenden Ebene von der Tragsäule (17b) aus über eine Länge von mindestens 2,0 m, bevorzugt mindestens 2,5 m, besonders bevorzugt mindestens 3,0 m, erstreckt, vorzugsweise, dass sich der Freiraum (20) zwischen Tragbalken (17a) und unterem Gestellteil (22a) über den größten Teil der Länge des Tragbalkens (17a) erstreckt.

6. Bearbeitungsanlage nach Anspruch 5, wobei die Tragsäule (17b), des Unterwerkzeugträgers (17) am unteren Gestellteil (22a) in der Querrichtung (Y) linear verfahrbar ist.

7. Bearbeitungsanlage nach einem der vorhergehenden Ansprüche, wobei das Unterwerkzeug (15) am Unterwerkzeugträger (17) insbesondere am Tragbalken (17a), in einer in der Längsrichtung (X) und Querrichtung (Y) verlaufenden Ebene linear verfahrbar ist, vorzugsweise derart, dass die zweite Werkzeugachse (12b) in mindestens einer Bearbeitungsposition des Unterwerkzeugs (15) koaxial zur Unterwerkzeugträgerachse (18) anordenbar ist.

8. Bearbeitungsanlage nach einem der vorhergehenden Ansprüche, wobei das Oberwerkzeug (13) an einem Oberwerkzeugträger (16) gelagert ist, wobei der Oberwerkzeugträger (16) an einem oberen Gestellteil (22d) gelagert ist, das sich in der Querrichtung (Y) erstreckt, vorzugsweise,.

9. Bearbeitungsanlage nach Anspruch 8, wobei der Oberwerkzeugträger (16) an dem oberen Gestellteil (22d) in der Querrichtung (Y) linear verfahrbar ist, vorzugsweise derart, dass die erste Werkzeugachse (12a) in mindestens einer Bearbeitungsposition des Oberwerkzeugs (13) koaxial zur Unterwerkzeugträgerachse (18) anordenbar ist.

10. Bearbeitungsanlage nach einem der vorhergehenden Ansprüche, wobei der untere Gestellteil (22a), insbesondere zusammen mit der Oberwerkzeugeinheit (11) und Unterwerkzeugeinheit (14), in der Längsrichtung (X) linear verfahrbar ist.

11. Bearbeitungsanlage nach einem der vorhergehenden Ansprüche, wobei die Bearbeitungsanlage (1)
- einen ersten Antriebsmotor für eine Drehbewegung (24) des Unterwerkzeugträgers (17), insbesondere relativ zum unteren Gestellteil,
- einen zweiten Antriebsmotor für eine Linearbewegung (25) des Unterwerkzeugträgers (17), insbesondere relativ zum unteren Gestellteil,
- einen dritten Antriebsmotor für eine Linearbewegung (26) des Unterwerkzeugs (15), insbesondere relativ zum Unterwerkzeugträger (17),
- einen vierten Antriebsmotor für eine Linearbewegung (27) des Tragbalkens (17a) des Unterwerkzeugträgers (17), insbesondere relativ zur Tragsäule (17b) des Unterwerkzeugträgers (17),
- einen fünften Antriebsmotor für eine Linearbewegung (28) des Oberwerkzeugträgers (16), insbesondere relativ zum oberen Gestellteil (22d) und/oder unteren Gestellteil (22a), und/oder
- einen sechsten Antriebsmotor für eine Linearbewegung (29) des unteren Gestellteils (22a), insbesondere relativ zum Untergrund (23),
aufweist, vorzugsweise, dass der erste Antriebsmotor, der zweite Antriebsmotor, der dritte Antriebsmotor, der vierte Antriebsmotor, der fünfte Antriebsmotor und/oder der sechste Antriebsmotor unabhängig voneinander betätigbar sind.

12. Verfahren zur Bearbeitung eines Flugzeugstrukturbauteils (2) mit einer Bearbeitungsanlage (1) nach einem der vorhergehenden Ansprüche, wobei während der Bearbeitung des Flugzeugstrukturbauteils (2), insbesondere während eines Niet- oder Bohrvorgangs, die erste Werkzeugachse (12a) und/oder zweite Werkzeugachse (12b) zumindest temporär nicht-koaxial zur Unterwerkzeugträgerachse (18) verläuft.

13. Verfahren nach Anspruch 12, wobei während der Bearbeitung des Flugzeugstrukturbauteils (2), insbesondere während eines Niet- oder Bohrvorgangs, die erste Werkzeugachse (12a) und/oder zweite Werkzeugachse (12b) zumindest temporär parallelverschoben zur Unterwerkzeugträgerachse (18) ist.

14. Verfahren nach Anspruch 12 oder 13, wobei der Aufspannrahmen (4) mit dem daran angeordneten Flugzeugstrukturbauteil über einen Winkelbereich von mindestens 180°, vorzugsweise von mehr als 180°, um eine zur Stationslängsachse (6) parallel ausgerichtete und/oder ausrichtbare Rahmenlängsachse (21) geschwenkt wird.

## Claims

1. Machining installation for aircraft structural components (2), having a machining station (3) which comprises a clamping frame (4) for receiving the aircraft structural component (2) to be machined in each case, wherein the clamping frame (4) extends along a station longitudinal axis (6), extending in a longitudinal direction (X), and which comprises a machining unit (5) for machining the aircraft structural component (2), which machining unit has a top tool unit (11) with a top tool (13) oriented along a first tool axis (12a) and has a bottom tool unit (14) with a bottom tool (15) oriented along a second tool axis (12b), wherein the first tool axis (12a) and the second tool axis (12b) are or are able to be oriented parallel to a vertical direction (Z), which is at an angle, in particular orthogonal, to the longitudinal axis (X), wherein, in at least one machining position of the top tool (13) and in at least one machining position of the bottom tool (15), the first tool axis (12a) and the second tool axis (12b) are oriented coaxially with respect to one another, and wherein the bottom tool (15) is mounted on a bottom-tool carrier (17), wherein the lower framework part (22a) and upper framework part (22d) are connected to one another via at least one lateral framework part (22b, 22c), wherein the lower framework part (22d), the at least one lateral framework part (22b, 22c) and the upper framework part (22d) together form a C-shape or portal-like shape, wherein the bottom-tool carrier (17) is linearly moveable on the lower framework part (22a) in the transverse direction (Y), wherein, in at least one machining position of the top tool (13) and/or in at least one machining position of the bottom tool (15), the respective tool axis (12a, 12b) is not coaxial with the bottom-tool-carrier axis (18).

2. Machining installation according to Claim 1, wherein, in the at least one machining position, the respective tool axis (12a, 12b) is displaced parallel to the bottom-tool-carrier axis (18), preferably in that, in the at least one machining position, the maximally settable distance between the respective tool axis (12a, 12b) and the bottom-tool-carrier axis (18) is at least 1.0 m, preferably at least 2.0 m, particularly preferably at least 3.0 m.

3. Machining installation according to Claim 1 or 2, wherein the bottom-tool carrier (17) is rotatably mounted on a lower framework part (22a) extending in a transverse direction (Y), which is orthogonal to the longitudinal direction (X) and the vertical direction (Z), wherein, in the at least one machining position in which the respective tool axis (12a, 12b) is not coaxial with or is displaced parallel to the bottom-tool-carrier axis (18), a clearance (20) is formed between bottom tool (18) and lower framework part (22a), which clearance extends in the vertical direction (Z) from the lower framework part (22a) as far as the bottom tool (15) or as far as a portion of the bottom-tool carrier (17) on which the bottom tool (15) is mounted, preferably in that the clearance (20) has a height of at least 2.0 m, preferably at least 2.5 m, particularly preferably at least 3.0 m, in the vertical direction (Z).

4. Machining installation according to one of the preceding claims, wherein the bottom-tool carrier (17) has a supporting beam (17a) on which the bottom tool (15) is mounted, and has a supporting column (17b) which is rotatably mounted and on which the supporting beam (17a) is fastened, preferably in that the supporting beam (17a) extends substantially in a plane extending in the longitudinal direction (X) and transverse direction (Y) and the supporting column (17b) extends substantially in the vertical direction (Z) and/or supporting beam (17a) and supporting column (17b) together form an L-shape.

5. Machining installation according to Claim 4, wherein the supporting beam (17a) is spaced at least 2.0 m, preferably at least 2.5 m, particularly preferably at least 3.0 m, apart from the lower framework part (22a) and/or extends in the plane extending in the longitudinal direction (X) and transverse direction (Y) over a length of at least 2.0 m, preferably at least 2.5 m, particularly preferably at least 3.0 m, from the supporting column (17b), preferably in that the clearance (20) between supporting beam (17a) and lower framework part (22a) extends over most of the length of the supporting beam (17a).

6. Machining installation according to Claim 5, wherein the supporting column (17b) of the bottom-tool carrier (17) is linearly moveable on the lower framework part (22a) in the transverse direction (Y).

7. Machining installation according to one of the preceding claims, wherein the bottom tool (15) is linearly moveable on the bottom-tool carrier (17), in particular on the supporting beam (17a), in a plane extending in the longitudinal direction (X) and transverse direction (Y), preferably in such a way that the second tool axis (12b) is able to be arranged coaxially with respect to the bottom-tool-carrier axis (18) in at least one machining position of the bottom tool (15).

8. Machining installation according to one of the preceding claims, wherein the top tool (13) is mounted on a top-tool carrier (16), wherein the top-tool carrier (16) is mounted on an upper framework part (22d) which extends in the transverse direction (Y), preferably,.

9. Machining installation according to Claim 8, wherein the top-tool carrier (16) is linearly moveable on the upper framework part (22d) in the transverse direction (Y), preferably in such a way that the first tool axis (12a) is able to be arranged coaxially with respect to the bottom-tool-carrier axis (18) in at least one machining position of the top tool (13).

10. Machining installation according to one of the preceding claims, wherein the lower framework part (22a), in particular together with the top tool unit (11) and the bottom tool unit (14), is linearly moveable in the longitudinal direction (X).

11. Machining installation according to one of the preceding claims, wherein the machining installation (1) has
- a first drive motor for a rotational movement (24) of the bottom-tool carrier (17), in particular relative to the lower framework part,
- a second drive motor for a linear movement (25) of the bottom-tool carrier (17), in particular relative to the lower framework part,
- a third drive motor for a linear movement (26) of the bottom tool (15), in particular relative to the bottom-tool carrier (17),
- a fourth drive motor for a linear movement (27) of the supporting beam (17a) of the bottom-tool carrier (17), in particular relative to the supporting column (17b) of the bottom-tool carrier (17),
- a fifth drive motor for a linear movement (28) of the top-tool carrier (16), in particular relative to the upper framework part (22d) and/or lower framework part (22a), and/or
- a sixth drive motor for a linear movement (29) of the lower framework part (22a), in particular relative to the foundation (23),
preferably in that the first drive motor, the second drive motor, the third drive motor, the fourth drive motor, the fifth drive motor and/or the sixth drive motor are actuatable independently of one another.

12. Method for machining an aircraft structural component (2) using a machining installation (1) according to one of the preceding claims, wherein, during the machining of the aircraft structural component (2), in particular during a riveting or drilling process, the first tool axis (12a) and/or the second tool axis (12b) is at least temporarily not coaxial with the bottom-tool-carrier axis (18).

13. Method according to Claim 12, wherein, during the machining of the aircraft structural component (2), in particular during a riveting or drilling process, the first tool axis (12a) and/or the second tool axis (12b) is at least temporarily displaced parallel to the bottom-tool-carrier axis (18).

14. Method according to Claim 12 or 13, wherein the clamping frame (4), with the aircraft structural component arranged thereon, is pivoted about a frame longitudinal axis (21), which is and/or is able to be oriented parallel to the station longitudinal axis (6), over an angle range of at least 180°, preferably of more than 180°.

## Revendications

1. Installation de traitement de composants structuraux d'aéronef (2), avec un poste de traitement (3) comprenant un cadre de serrage (4) pour recevoir le composant structural d'aéronef à usiner (2) respectif, le cadre de serrage (4) s'étendant le long d'un axe longitudinal de poste (6) s'étendant dans une direction longitudinale (X), et une unité de traitement (5) pour le traitement du composant structural d'aéronef (2), qui présente une unité d'outil supérieur (11) avec un outil supérieur (13) orienté le long d'un premier axe d'outil (12a) et une unité d'outil inférieur (14) avec un outil inférieur (15) orienté le long d'un deuxième axe d'outil (12b), le premier axe d'outil (12a) et le deuxième axe d'outil (12b) étant orientés ou pouvant être orientés parallèlement à une direction verticale (Z) angulaire, notamment orthogonale, par rapport à la direction longitudinale (X), dans au moins une position de traitement de l'outil supérieur (13) et dans au moins une position de traitement de l'outil inférieur (15), le premier axe d'outil (12a) et le deuxième axe d'outil (12b) étant orientés coaxialement l'un par rapport à l'autre et l'outil inférieur (15) étant monté sur un support d'outil inférieur (17), la partie de bâti inférieure (22a) et la partie de bâti supérieure (22d) étant reliées l'une à l'autre par l'intermédiaire d'au moins une partie de bâti latérale (22b, 22c), la partie de bâti inférieure (22d), l'au moins une partie de bâti latérale (22b, 22c) et la partie de bâti supérieure (22d) formant ensemble une forme en C ou une forme de portique, le support d'outil inférieur (17) pouvant être déplacé linéairement sur la partie de bâti inférieure (22a) dans la direction transversale (Y),
dans au moins une position de traitement de l'outil supérieur (13) et/ou dans au moins une position de traitement de l'outil inférieur (15), l'axe d'outil respectif (12a, 12b) s'étendant non coaxialement par rapport à l'axe de support d'outil inférieur (18).

2. Installation de traitement selon la revendication 1, dans l'au moins une position de traitement, l'axe d'outil respectif (12a, 12b) étant décalé parallèlement à l'axe de support d'outil inférieur (18), de préférence dans l'au moins une position de traitement, la distance maximale réglable entre l'axe d'outil respectif (12a, 12b) et l'axe de support d'outil inférieur (18) étant d'au moins 1,0 m, de préférence d'au moins 2,0 m, de manière particulièrement préférée d'au moins 3,0 m.

3. Installation de traitement selon la revendication 1 ou 2, le support d'outil inférieur (17) étant monté de manière rotative sur une partie de bâti inférieure (22a) qui s'étend dans une direction transversale (Y) orthogonale à la direction longitudinale (X) et à la direction verticale (Z), dans l'au moins une position de traitement dans laquelle l'axe d'outil respectif (12a, 12b) n'est pas coaxial ou est décalé parallèlement à l'axe de support d'outil inférieur (18), un espace libre (20) étant formé entre l'outil inférieur (18) et la partie de bâti inférieure (22a), qui s'étend dans la direction verticale (Z) depuis la partie de bâti inférieure (22a) jusqu'à l'outil inférieur (15) ou jusqu'à une section du support d'outil inférieur (17) sur laquelle l'outil inférieur (15) est monté, de préférence l'espace libre (20) ayant dans la direction verticale (Z) une hauteur d'au moins 2,0 m, de préférence d'au moins 2,5 m, de manière particulièrement préférée d'au moins 3,0 m.

4. Installation de traitement selon l'une quelconque des revendications précédentes, le support d'outil inférieur (17) présentant une poutre porteuse (17a) sur laquelle l'outil inférieur (15) est monté, et une colonne porteuse (17b) qui est montée de manière rotative et à laquelle la poutre porteuse (17a) est fixée, de préférence la poutre porteuse (17a) s'étendant essentiellement dans un plan s'étendant dans la direction longitudinale (X) et la direction transversale (Y) et la colonne porteuse (17b) s'étendant essentiellement dans la direction verticale (Z) et/ou la poutre porteuse (17a) et la colonne porteuse (17b) formant ensemble une forme en L.

5. Installation de traitement selon la revendication 4, la poutre porteuse (17a) étant espacée d'au moins 2,0 m, de préférence d'au moins 2,5 m, de manière particulièrement préférée d'au moins 3,0 m, de la partie de bâti inférieure (22a) et/ou s'étendant dans le plan s'étendant dans la direction longitudinale (X) et la direction transversale (Y) à partir de la colonne porteuse (17b) sur une longueur d'au moins 2,0 m, de préférence au moins 2,5 m, de manière particulièrement préférée au moins 3,0 m, de préférence l'espace libre (20) entre la poutre porteuse (17a) et la partie de bâti inférieure (22a) s'étendant sur la plus grande partie de la longueur de la poutre porteuse (17a).

6. Installation de traitement selon la revendication 5, la colonne porteuse (17b) du support d'outil inférieur (17) pouvant être déplacée linéairement sur la partie de bâti inférieure (22a) dans la direction transversale (Y).

7. Installation de traitement selon l'une quelconque des revendications précédentes, l'outil inférieur (15) pouvant être déplacé linéairement sur le support d'outil inférieur (17), notamment sur la poutre porteuse (17a), dans un plan s'étendant dans la direction longitudinale (X) et la direction transversale (Y), de préférence de telle sorte que le deuxième axe d'outil (12b) peut être agencé dans au moins une position de traitement de l'outil inférieur (15) coaxialement par rapport à l'axe de support d'outil inférieur (18).

8. Installation de traitement selon l'une quelconque des revendications précédentes, l'outil supérieur (13) étant monté sur un support d'outil supérieur (16), le support d'outil supérieur (16) étant monté sur une partie de bâti supérieure (22d) qui s'étend dans la direction transversale (Y), de préférence.

9. Installation de traitement selon la revendication le support d'outil supérieur (16) pouvant être déplacé linéairement sur la partie de bâti supérieure (22d) dans la direction transversale (Y), de préférence de telle sorte que le premier axe d'outil (12a) peut être agencé dans au moins une position de traitement de l'outil supérieur (13) coaxialement par rapport à l'axe de support d'outil inférieur (18).

10. Installation de traitement selon l'une quelconque des revendications précédentes, la partie de bâti inférieure (22a), notamment conjointement avec l'unité d'outil supérieur (11) et l'unité d'outil inférieur (14), pouvant être déplacée linéairement dans la direction longitudinale (X).

11. Installation de traitement selon l'une quelconque des revendications précédentes, l'installation de traitement (1) présentant
- un premier moteur d'entraînement pour un mouvement de rotation (24) du support d'outil inférieur (17), notamment par rapport à la partie de bâti inférieure,
- un deuxième moteur d'entraînement pour un mouvement linéaire (25) du support d'outil inférieur (17), notamment par rapport à la partie de bâti inférieure,
- un troisième moteur d'entraînement pour un mouvement linéaire (26) de l'outil inférieur (15), notamment par rapport au support d'outil inférieur (17),
- un quatrième moteur d'entraînement pour un mouvement linéaire (27) de la poutre porteuse (17a) du support d'outil inférieur (17), notamment par rapport à la colonne porteuse (17b) du support d'outil inférieur (17),
- un cinquième moteur d'entraînement pour un mouvement linéaire (28) du support d'outil supérieur (16), notamment par rapport à la partie de bâti supérieure (22d) et/ou à la partie de bâti inférieure (22a), et/ou
- un sixième moteur d'entraînement pour un mouvement linéaire (29) de la partie de bâti inférieure (22a), notamment par rapport au sol (23),
de préférence le premier moteur d'entraînement, le deuxième moteur d'entraînement, le troisième moteur d'entraînement, le quatrième moteur d'entraînement, le cinquième moteur d'entraînement et/ou le sixième moteur d'entraînement étant actionnables indépendamment les uns des autres.

12. Procédé de traitement d'un composant structural d'aéronef (2) avec une installation de traitement (1) selon l'une quelconque des revendications précédentes, pendant le traitement de l'élément structural d'aéronef (2), notamment pendant une opération de rivetage ou de perçage, le premier axe d'outil (12a) et/ou le deuxième axe d'outil (12b) s'étendant au moins temporairement non coaxialement par rapport à l'axe de support d'outil inférieur (18).

13. Procédé selon la revendication 12, pendant le traitement de l'élément structural d'aéronef (2), notamment pendant une opération de rivetage ou de perçage, le premier axe d'outil (12a) et/ou le deuxième axe d'outil (12b) étant au moins temporairement décalé parallèlement par rapport à l'axe de support d'outil inférieur (18).

14. Procédé selon la revendication 12 ou 13, le cadre de serrage (4) avec l'élément structural d'aéronef agencé sur celui-ci étant pivoté sur une plage angulaire d'au moins 180°, de préférence de plus de 180°, autour d'un axe longitudinal de cadre (21) orienté et/ou pouvant être orienté parallèlement à l'axe longitudinal de poste (6).
